# EUROPÄISCHE PATENTSCHRIFT

(11) **EP 2 705 939 B1**
(45) Veröffentlichungstag und Bekanntmachung des Hinweises auf die Patenterteilung: **18.11.2015**
(21) Anmeldenummer: 13180318.1
(22) Anmeldetag: 14.08.2013
(51) Int. Cl.: B29B 17/02, B08B 9/08

(54) **Verfahren und Vorrichtung zum Wiederaufbereiten etikettierter Kunststoffartikel**
Method and apparatus for the reprocessing of labelled plastic items
Procédé et dispositif de recyclage d'articles en matière plastique étiquetés

(30) Priorität: 05.09.2012 DE 102012215752
(43) Veröffentlichungstag der Anmeldung: 12.03.2014
(73) Patentinhaber: Krones AG, 93073 Neutraubling (DE)
(72) Erfinder: Friedlaender, Thomas, 93073 Neutraubling (DE)
(74) Vertreter: Grünecker Patent- und Rechtsanwälte PartG mbB

(56) Entgegenhaltungen:
- DE-A1- 10 308 500
- JP-A- 2006 035 060
- KR-A- 19990 084 227
- US-A- 4 830 699

## Beschreibung

Die Erfindung betrifft ein Verfahren nach dem Oberbegriff des Anspruchs 1 und eine entsprechende Vorrichtung.

Kunststoffartikel, insbesondere Getränkeflaschen aus Kunststoff, wie beispielsweise PET, werden in zunehmendem Maße mit Kunststoffetiketten versehen. Bei der Wiederaufbereitung derartiger Kunststoffartikel müssen diese Etiketten, ebenso wie herkömmliche Papieretiketten, möglichst vollständig entfernt werden. Ansonsten verursachen beispielsweise in Waschprozessen eingesetzte Ätzmittel einen unerwünschten Farbeintrag in das jeweilige Waschmedium und in den gewaschenen Kunststoff.

Das Entfernen der Etiketten mittels Nassverfahren, wie beispielsweise bei der Ganzflaschenwäsche, ist insbesondere bei Kunststoffetiketten nicht ausreichend effektiv. Auch durch Trockenverfahren, beispielsweise mittels Schneidwerkzeugen, lassen sich die Etiketten nicht in dem gewünschten Maße zuverlässig entfernen, so dass in der Regel eine aufwändige manuelle Sortierung der Artikel vor der anschließenden Zerkleinerung notwendig ist. Die aussortierten Artikel werden dann üblicherweise entsorgt bzw. können nur noch für minderwertige Prozesse verwendet werden. DE 10308500 offenbart ein solches trockenes Verfahren.

Aus der US 4,830,699 ist ferner ein Verfahren nach dem Obergriff des Anspruchs 1 bekannt.

Es besteht somit bei herkömmlichen Verfahren und Vorrichtungen das Problem, dass entweder ein sehr hoher personeller Aufwand bei der Nachsortierung betrieben werden muss, um eine ausreichend sortenreine und farbreine Fraktion für die anschließende Zerkleinerung zu erhalten, oder dass die üblicherweise eingefärbten Etiketten in derart großer Menge im zu zerkleinernden Material vorhanden bleiben, dass eine unerwünschte Einfärbung des wieder aufbereiteten Materials nicht vermieden werden kann. Besonders nachteilig ist dies bei klaren Kunststoffen, insbesondere bei klarem PET für die Verpackung von Lebensmitteln. Außerdem ist es wünschenswert, die Effizienz der Wiederaufbereitung etikettierter Artikel zu optimieren.

Es besteht somit der Bedarf für in dieser Hinsicht verbesserte Verfahren und Vorrichtungen zur Wiederaufbereitung von Kunststoffartikeln, insbesondere der weit verbreiteten PET-Getränkeflaschen.

Die gestellte Aufgabe wird mit einem Verfahren nach Anspruch 1 gelöst. Demnach werden Etiketten von Kunststoffartikeln in einem ersten Behandlungsschritt mechanisch abgelöst, und in einem zweiten Behandlungsschritt nachfolgend maschinell sortiert. Erfindungsgemäß werden beim Sortieren diejenigen Kunststoffartikel, von denen die Etiketten im ersten Behandlungsschritt nicht ordnungsgemäß entfernt wurden, aussortiert. Ferner werden die derart aussortierten Kunststoffartikel wieder dem ersten Behandlungsschritt zugeführt.

Die Kunststoffartikel mit nicht ordnungsgemäß entfernten Etiketten können maschinell und manuell erkannt und anschließend maschinell und manuell aus dem Artikelstrom für eine nachfolgende Zerkleinerung der Kunststoffartikel aussortiert und zurück geführt werden. Dadurch lassen sich die Effektivität und die Effizienz der Etikettenentfernung steigern.

Maschinelle und manuelle Schritte lassen sich beim Erkennen und/oder Aussortieren kombinieren. Beispielsweise könnte auf eine maschinelle Vorsortierung eine manuelle Sortierung folgen. Auf die Etikettenentfernung folgende Sortierschritte lassen sich beliebig kombinieren, um die jeweils aussortierten Kunststoffartikel mit nicht ordnungsgemäß entfernten Etiketten erfindungsgemäß wieder zur Etikettenentfernung zurück führen. Etiketten im Sinne der Erfindung können beispielsweise aus Kunststoff, Papier, Metallfolien oder Verbundmaterialen aus diesen Stoffklassen bestehen. Die Etiketten können auf den Kunststoffartikeln beispielsweise aufgeklebt und/oder aufgeschrumpft sein oder durch elastischen Reibschluss an diesen haften. Als nicht ordnungsgemäß können beispielsweise solche Kunststoffartikel definiert werden, bei denen ein geeignetes vorgegebenes Kriterium erfüllt wird, beispielsweise eine bestimmte Etikettenfarbe erkannt wird, eine maximal zulässige Restgröße des Etiketts festgestellt wird, oder dergleichen.

Das Zurückführen der aussortierten Kunststoffartikel kann ein Zwischenspeichern in einem Artikelpuffer umfassen oder auf direktem Wege erfolgen, beispielsweise mittels eines Förderbands oder dergleichen. Hierbei können Kunststoffartikel mit nicht ordnungsgemäß entfernten Etiketten wiederholt eine derartige Rückführschleife durchlaufen, insbesondere solange, bis die Etiketten auf ein vorgegebenes Maß, im Sinne von ordnungsgemäß, entfernt worden sind.

Vorzugsweise werden die derart aussortierten Kunststoffartikel vor dem erneuten Durchlaufen des ersten Behandlungsschritts unbehandelten Kunststoffartikeln zugemischt. Unbehandelte Kunststoffartikel im Sinne der Erfindung sind solche vor erstmaliger Etikettenentfernung. Somit lässt sich auf einfache Weise eine Rückführschleife bereitstellen, in dem die Kunststoffartikel bei Bedarf auch mehrfach an den Anfang des ersten Behandlungsschritts zurückgeführt werden. Durch das Zumischen der aussortierten Kunststoffartikel lässt sich zudem ein im Wesentlichen gleich bleibender Anlagenbetrieb gewährleisten, da die aussortierten Kunststoffartikel und die unbehandelten Kunststoffartikel in gleicher Weise, sowohl als kontinuierlicher, gemischter Artikelstrom als auch als Mischcharge, dem ersten und zweiten Behandlungsschritt zugeführt werden können. Es wäre allerdings auch möglich, die aussortierten Kunststoffartikel getrennt zu sammeln und als separate Artikelcharge erneut zu behandeln. Unbehandelte und aussortierte Kunststoffartikel würden dann beispielsweise chargenweise im Wechsel oder als parallele Artikelströme oder Artikelchargen aufbereitet.

Vorzugsweise werden die aussortierten Kunststoffartikel gemeinsam mit unbehandelten Kunststoffartikeln vor dem ersten Behandlungsschritt zwischengespeichert. Dazu lassen sich herkömmliche Artikelpuffer verwenden, in denen die beispielsweise in unregelmäßigen Abständen angelieferten Kunststoffartikel nach dem Herauslösen aus einem Sammelgebinde, Ballen oder dergleichen und vor dem Entfernen der Etiketten zwischengespeichert werden. Ein zusätzlicher Artikelpuffer für die aussortierten Kunststoffartikel ist dann entbehrlich. Ein zusätzlicher Artikelpuffer wäre jedoch insbesondere im Zusammenhang mit einem parallel durchgeführten Behandlungsschritt zum Ablösen der Etiketten an den Kunststoffpartikeln mit nicht ordnungsgemäß entfernten Etiketten ebenso möglich. Ein sogenanntes Aufkonzentrieren des primären Materialstroms mit nicht ordnungsgemäß entfernten Etiketten vor dem ersten Behandlungsschritt lässt sich dadurch reduzieren oder vermeiden.

Erfindungsgemäß werden die Etiketten mechanisch von den Kunststoffartikeln abgelöst. Hierfür werden vorzugsweise schneidende und/oder abrasive Werkzeuge verwendet, beispielsweise Messer. Das mechanische Entfernen der Etiketten erfolgt vorzugsweise als Trockenverfahren, bei dem insbesondere keine Ätzmittel zum Ablösen der Etiketten eingesetzt werden. Dadurch lässt sich ein unerwünschter Farbeintrag aus den Etiketten in die Kunststoffartikel vermeiden. Eine Nass-Ablösung der Etiketten wäre jedoch ebenso möglich.

Vorzugsweise werden die Kunststoffartikel im unzerkleinerten Zustand im zweiten Behandlungsschritt sortiert. Die Sortierung kann dann maschinell in einem herkömmlichen Ganzflaschen-Sorter, in einem geeignet modifizierten Ganzflaschen-Sorter oder dergleichen durchgeführt werden. In diesem werden in bekannter Weise Artikelfraktionen mit bestimmter Farbgebung und/oder Fremdstofffraktionen und/oder Artikelfraktionen aus bestimmten Materialien, wie beispielsweise Metall, von den zu zerkleinernden Kunststoffartikeln abgesondert. Anders gesagt lässt sich die erfindungsgemäße Etikettenentfernung und Sortierung mit Maschinen durchführen, die für das Wiederaufbereiten von Kunststoffartikeln, insbesondere von Getränkeflaschen aus PET, ohnehin vorteilhaft sind. Bei Bedarf müssen diese Maschinen lediglich zum Erkennen der Etiketten oder Etikettenreste geeignet modifiziert werden. Somit lässt sich der personelle Aufwand für ein manuelles Nachsortieren vor der Zerkleinerung der Kunststoffartikel deutlich reduzieren, ohne den apparativen Aufwand in gleichem Maße zu erhöhen.

Vorzugsweise werden nicht ordnungsgemäß entfernte Etiketten anhand ihres Materials und/oder ihrer Farbe und/oder ihrer Transparenz und/oder ihrer Position auf dem Kunststoffartikel und/oder ihrer Formgebung erkannt. Es lassen sich somit bei herkömmlichen Sortern verwendete und/oder implementierbare Kriterien zum Erkennen der nicht ordnungsgemäß entfernten Etiketten verwenden. Beispielsweise eignet sich eine Erkennung der Etiketten anhand einer bestimmten Farbgebung besonders gut für Kunststoffetiketten, deren Materialeigenschaften sich von denjenigen der Kunststoffartikel, wie beispielsweise der PET-Flaschen, nur geringfügig unterscheiden. Eine Erkennung anhand bestimmter Materialien eignet sich beispielsweise für metallhaltige Folienetiketten oder dergleichen. Eine Erkennung der Etiketten anhand ihrer Transparenz eignet sich beispielsweise besonders für klare Getränkeflaschen oder dergleichen. Da sich die Etiketten bestimmungsgemäß visuell meist deutlich von den Kunststoffartikeln unterscheiden, lassen sich optische, wie beispielsweise Bild gebende Erkennungsverfahren für das Aussortieren der Kunststoffartikel mit nicht ordnungsgemäß entfernten Etiketten besonders vorteilhaft einsetzen.

Das erfindungsgemäße Verfahren umfasst vorzugsweise ferner einen dritten Behandlungsschritt, in dem im zweiten Behandlungsschritt nicht aussortierte Kunststoffartikel zerkleinert werden. Dadurch lassen sich Kunststoff-Flakes mit einem geringen Anteil von Verunreinigungen und/oder Verfärbungen durch Etikettenreste erzeugen. Insbesondere kann der Aufwand für eine gegebenenfalls vor dem Zerkleinern zwischengeschaltete manuelle Nachsortierung erheblich reduziert werden.

Vorzugsweise sind die Kunststoffartikel benutzte PET-Getränkeflaschen. Derartige Flaschen fallen in besonders großen Mengen an und sind daher für die Wiederaufbereitung von besonderem Interesse. Außerdem sind für die Wiederverwendung des wieder aufbereiteten Kunststoffmaterials im Lebensmittelbereich besonders hohe Anforderungen an die Reinheit des wiederaufbereiteten Materials zu erfüllen. Dies lässt sich mit dem erfindungsgemäßen Verfahren auf besonders effiziente Weise gewährleisten.

Die gestellte Aufgabe wird ferner mit einer Vorrichtung gemäß Anspruch 8 gelöst.

Die erfindungsgemäße Funktion zum Erkennen und Aussortieren von Kunststoffartikeln mit nicht ordnungsgemäß entfernten Etiketten lässt sich auf vergleichsweise einfache Weise in herkömmlichen Sortern realisieren. Artikelpuffer und/oder Transportmittel für derart aussortierte Kunststoffartikel lassen sich zudem auf einfache Weise in Wiederaufbereitungsanlagen für Kunststoffartikel integrieren, insbesondere auch in bereits bestehende Anlagen. Erfindungsgemäße Transportmittel sind beispielsweise stationäre Transportstrecken, wie Förderbänder oder dergleichen, aber auch Transportfahrzeuge. Erfindungsgemäße Artikelpuffer können stationär und/oder auf Transportfahrzeugen ausgebildet sein.

Somit lässt sich die Effektivität und die Effizienz des Etikettenentfernens steigern, insbesondere bei gleichzeitig deutlich reduziertem Aufwand für ein manuelles Nachsortieren der Kunststoffartikel. Die Etikettenentfernereinheit arbeitet im Trockenverfahren durch mechanisches Ablösen der Etiketten von den Kunststoffbehältern, beispielsweise mittels geeigneter abrasiver und/oder schneidender Werkzeuge.

Vorzugsweise ist stromaufwärts der Etikettenentfernereinheit ein gemeinsamer Artikelpuffer für die aussortierten Kunststoffartikel und für unbehandelte Kunststoffartikel vorgesehen. Anders gesagt werden die aussortierten Kunststoffartikel vorzugsweise zu einem in herkömmlichen Aufbereitungsanlagen ohnehin vorhandenen Artikelpuffer für einlaufende Kunststoffartikel transportiert. Hierbei können die aussortierten Kunststoffartikel chargenweise oder kontinuierlich von der Sortiereinrichtung zum Artikelpuffer zurück transportiert werden. Es kann somit ein kontinuierlich betriebenes Förderband oder dergleichen vorgesehen sein oder ein Transportmittel, wie beispielsweise ein Fahrzeug, mit dem eine bestimmte Menge der aussortierten Kunststoffartikel gesammelt und zum gemeinsamen Artikelpuffer transportiert wird. Fest installierte, umlaufende Transportmittel, wie Förderbänder oder dergleichen, sind für einen kontinuierlichen Anlagenbetrieb vorteilhaft, unabhängig davon, ob die Transportmittel kontinuierlich oder getaktet betrieben werden.

Vorzugsweise ist zwischen der Etikettenentfernereinheit und der Sortiereinheit ferner eine Trenneinheit zum Aussondern einer Fraktion mit abgelösten Etiketten von den Kunststoffartikeln vorgesehen. Derartige Trenneinheiten können beispielsweise nach dem Zentrifugalprinzip arbeiten, wie beispielsweise Zyklone oder dergleichen. Damit lassen sich die leichten abgelösten Etiketten von den vergleichsweise schweren unzerkleinerten Artikeln abtrennen. Folglich werden der Sortiereinrichtung vorzugsweise nur Kunststoffartikel ohne Etiketten und Kunststoffartikel mit nicht ordnungsgemäß abgelösten Etiketten zugeführt, nicht jedoch die in der Etikettenentfernereinheit zuvor abgelösten Etiketten. Dies ist im Sinne der Erfindung besonders vorteilhaft, da die Etiketten beim Aussortieren zuvor nicht ordnungsgemäß behandelter Kunststoffartikel erkannt werden müssen, wobei noch vorhandene abgelöste Etiketten stören.

Vorzugsweise ist stromabwärts der Sortiereinrichtung ferner ein Zerkleinerer zum Zerkleinern der sortierten Kunststoffartikel vorgesehen. Dadurch lassen sich Kunststoffartikel ohne Etiketten oder Etikettenreste selektiv zu Kunststoff-Flakes, insbesondere solchen aus PET, verarbeiten.

Zwischen der Sortiereinrichtung und dem Zerkleinerer können aus dem Stand der Technik bekannte Sortierstationen zwischengeschaltet sein, wie beispielsweise zur manuellen Nachsortierung der Kunststoffartikel und/oder zum maschinellen Aussortieren von Metallen.

Vorzugsweise ist die Sortiereinrichtung zum maschinellen Aussortieren wenigstens einer weiteren Fraktion aus Komponenten der Kunststoffartikel und/oder Fremdstoffen ausgebildet. Dadurch kann eine kompakte Sortierstation bereit gestellt werden.

Vorzugsweise ist die Sortiereinrichtung zum selektiven Inspizieren eines vorgegebenen Bereichs der Kunststoffartikel, in dem die Etiketten vorgesehen sind, ausgebildet. Beispielsweise könnten Etiketten und Etikettenreste Bild gebend besonders zuverlässig erkannt werden.

Eine bevorzugte Ausführungsform der Erfindung ist in der Zeichnung dargestellt. Es zeigen:
- Figur 1: ein Ablaufschema des erfindungsgemäßen Verfahrens; und
- Figur 2: ein Blockschaltbild einer erfindungsgemäßen Vorrichtung.

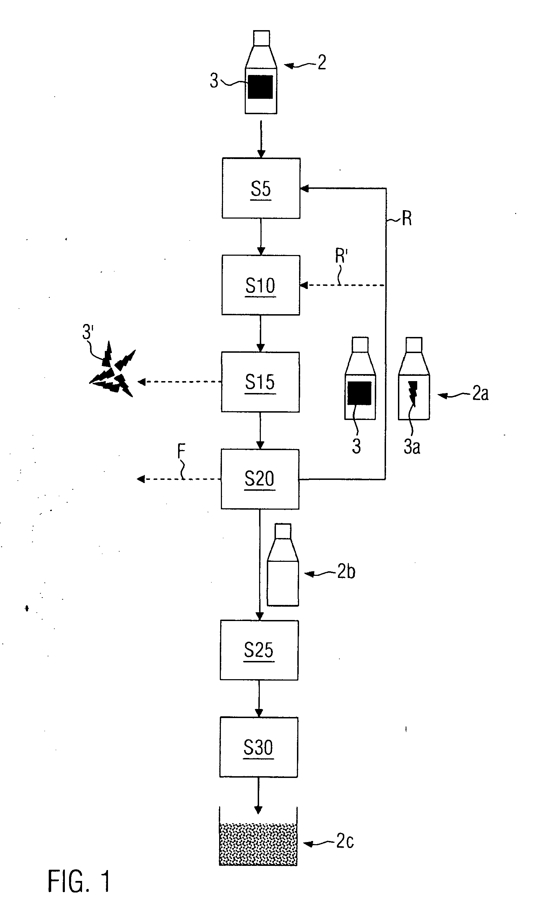

Wie die Figur 1 erkennen lässt, umfasst das erfindungsgemäße Verfahren zum Wiederaufbereiten etikettierter Kunststoffartikel 2, wie beispielsweise Getränkeflaschen, wenigstens einen ersten Behandlungsschritt S10 zum Ablösen von an den Kunststoffartikeln 2 vorgesehenen Etiketten 3 und einen nachfolgenden zweiten Behandlungsschritt S20, in dem Kunststoffartikel 2a, von denen die Etiketten 3 nicht ordnungsgemäß entfernt wurden, aussortiert werden. Die Kunststoffartikel 2 sind insbesondere benutzte Kunststoffbehälter, wie beispielsweise Getränkeflaschen, insbesondere solche aus PET.

Die aussortierten Kunststoffartikel 2a werden erfindungsgemäß auf einer Rückführschleife R, R' erneut dem ersten Behandlungsschritt S10 zugeführt. Besonders vorteilhaft ist hierbei die Variante R, bei der die aussortierten Kunststoffartikel 2a stromaufwärts des ersten Behandlungsschritts S10, unbehandelten Kunststoffartikeln 2 in einem optionalen Verfahrensschritt S5 zugemischt werden, um die Kunststoffartikel 2, 2a gemeinsam dem ersten Behandlungsschritt S10 zuzuführen. Das Zumischen der aussortierten Kunststoffartikel 2a kann beispielsweise durch gemeinsames Zwischenspeichern der unbehandelten Kunststoffartikel 2 und der aussortierten Kunststoffartikel 2a realisiert werden oder durch ein Zusammenführen auf einem eingangsseitigen Förderband oder dergleichen. Die unbehandelten Kunststoffartikel 2 sind definitionsgemäß solche, die der Etikettenentfernung erstmalig unterzogen werden.

In der Figur 1 sind weitere optionale Behandlungsschritte dargestellt, nämlich ein Zwischenschritt S15 zum Aussondern der im ersten Behandlungsschritt S10 abgelösten Etiketten oder Etikettenreste 3', ein weiterer Zwischenschritt S25 zum manuellen Nachsortieren der im zweiten Behandlungsschritt S20 nicht aussortierten Kunststoffartikel 2b, sowie ein dritter Behandlungsschritt S30 zum Zerkleinern der nicht aussortierten Kunststoffartikel 2b, um aus diesen Kunststoff-Flakes 2c oder dergleichen für nachfolgende Aufbereitungsprozesse der Kunststoffartikel 2 zu gewinnen. Diese können beispielsweise ein Waschen, eine Dekontamination und eine Festphasenkondensation der Kunststoff-Flakes 2c umfassen.

Der Zwischenschritt S25 könnte auch durch ein automatisches Nachsortieren ersetzt oder ergänzt werden oder aber ganz entbehrlich sein, je nach Qualität und Zusammensetzung der aufzubereitenden Kunststoffartikel 2 und der abzulösenden Etiketten 3. Letztere können beispielsweise aus Papier oder Kunststoff bestehen. Die Etiketten 3 könnten durch Aufkleben und/oder Aufschrumpfen an den Kunststoffartikeln 2 befestigt sein. Ebenso könnte es sich um Stretch-Sleeves, also elastische Kunststoffschläuche handeln, die im gedehnten Zustand über die Kunststoffartikel 2 gestülpt werden und im Wesentlichen reibschlüssig auf diesen haften.

Entsprechend können im ersten Behandlungsschritt S10 verschiedene maschinelle Verfahren zum Ablösen der Etiketten 3 verwendet werden. Erfindungsgemäss für eine qualitativ hochwertige Aufbereitung ist ein mechanisches Ablösen der Etiketten 3. Beispielsweise eignen sich für lediglich reibschlüssig haftende Folienhülsen Schneidwerkzeuge besonders gut. Aufgeklebte Etiketten 3 könnten gegebenenfalls mit anderen, abrasiven Werkzeugen besonders effektiv entfernt werden. Es handelt sich beim ersten Behandlungsschritt S10 vorzugsweise um ein Trockenverfahren, bei dem die Etiketten 3 ohne Einsatz von Lösungsmitteln, insbesondere ohne den Einsatz von Ätzmitteln, abgelöst werden. Das erfindungsgemäße Verfahren ist jedoch nicht auf die Verwendung von Trockenverfahren zum Ablösen der Etiketten 3 beschränkt. Die Etiketten 3 können somit mittels an sich bekannter Verfahren abgelöst und entsorgt werden.

Im zweiten Behandlungsschritt S20 werden die unzerkleinerten Kunststoffartikel 2 beispielsweise mittels optischer und/oder magnetischer und/oder elektrostatischer Verfahren inspiziert und Kunststoffartikel 2a mit nicht ordnungsgemäß entfernten Etiketten 3 oder Etikettenresten 3a maschinell aussortiert. Zusätzlich zum zweiten Behandlungsschritt S20 können in herkömmlicher Weise bestimmte im Artikelstrom vorhandene Fraktionen F zusätzlich ausgesondert werden. Derartige Fraktionen F können beispielsweise Artikelfraktionen bestimmter Färbung sein, Artikelfraktionen aus bestimmten Materialien, wie beispielsweise Metalle, und/oder Fraktionen mit gegebenenfalls nicht näher spezifizierten Fremdstoffen. Besonders vorteilhaft ist somit eine Konfiguration, bei der der zweite Behandlungsschritt S20 mit einer ohnehin für die Wiederaufbereitung von Kunststoffartikeln üblichen maschinellen Artikelsortierung in einer gemeinsamen Sortierstation kombiniert wird.

Generell ist der zweite Behandlungsschritt S20 jedoch auch als Kombination automatischer und manueller Teilschritte ausführbar. Beispielsweise könnte eine maschinelle Erkennung und Aussortierung durch eine unmittelbar nachfolgende manuelle Erkennung und Aussortierung ergänzt werden. Die aussortierten Kunststoffartikel 2a könnten dann unabhängig davon, ob sie maschinell oder manuell aussortiert wurden, gemeinsam zurück geführt werden. Die aussortierten Kunststoffartikel 2a werden im unzerkleinerten Zustand für die erneute Etikettenentfernung zurückgeführt. Unzerkleinert können sie bei Bedarf wiederholt den gleichen Behandlungsschritten unterzogen werden, ohne dabei die Handhabung der Kunststoffartikel 2, 2a zu ändern.

In der Figur 1 nicht dargestellt sind weitere herkömmliche Behandlungsschritte zum Vereinzeln der Kunststoffartikel 2 aus angelieferten Ballen oder dergleichen, beispielsweise in einem sogenannten Debaler, und zum ballistischen Auftrennen unterschiedlich geformter Artikelfraktionen, unterschiedlich feiner Artikelfraktionen oder dergleichen vor dem Entfernen der Etiketten 3. Ebenso können weitere Sortierschritte zwischengeschaltet sein, beispielsweise das Aussortieren metallischer Materialkomponenten. Derartige Verfahren sind aus dem Stand der Technik allgemein bekannt und lassen sich in das erfindungsgemäße Verfahren beliebig integrieren.

Somit können die in der Figur 1 eingangsseitig angedeuteten Kunststoffartikel 2 bereits durch einen Ballistik-Separator geeignet vorsortiert sein. Besonders vorteilhaft ist das erfindungsgemäße Verfahren für die Wiederaufbereitung von Getränkeflaschen aus PET, die vorzugsweise geeignet gesammelt und/oder vorsortiert dem eingangsseitigen Schritt S5 und/oder dem ersten Behandlungsschritt S10 zugeführt werden. Hierbei können die Kunststoffartikel 2 sowohl als kontinuierlicher Artikelstrom zugeführt werden, als auch chargenweise.

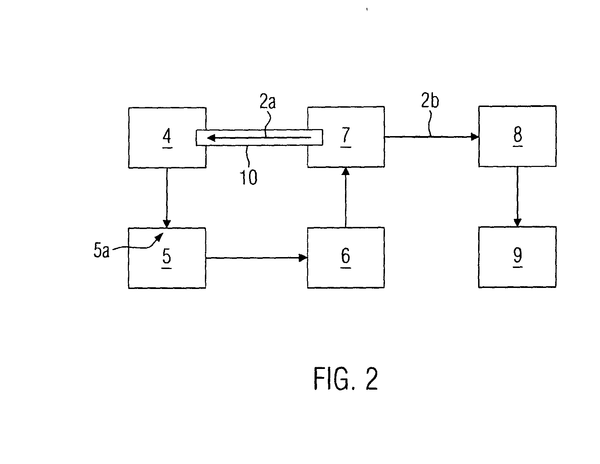

Wie die Figur 2 erkennen lässt, umfasst eine bevorzugte Ausführungsform 1 der erfindungsgemäßen Vorrichtung zum Wiederaufbereiten der benutzten Kunststoffartikel 2 einen Artikelpuffer 4 zum Zwischenspeichern angelieferter, gegebenenfalls geeignet vereinzelter Kunststoffartikel 2, eine Etikettenentfernereinheit 5, eine Trenneinheit 6 zum Aussondern abgelöster Etiketten 3, eine Sortiereinrichtung 7 zum Aussortieren der Kunststoffartikel 2a mit nicht ordnungsgemäß entfernten Etiketten 3 oder Etikettenresten 3a, eine Nachsortierstation 8 zum manuellen Nachsortieren der in der Sortiereinrichtung 7 nicht aussortierten Kunststoffartikel 2b und einen Zerkleinerer 9 zum Zerkleinern der nicht aussortierten Kunststoffartikel 2b, beispielsweise zum Herstellen von Kunststoff-Flakes.

Schematisch angedeutet ist ferner eine Transportstrecke 10, die die Sortiereinrichtung 7 mit dem Artikelpuffer 4 verbindet, um die in der Sortiereinrichtung 7 aussortierten Kunststoffartikel 2a entsprechend der Rückführschleife R über den Artikelpuffer 4 zur Etikettenentfernereinheit 5 zurück zu führen. Alternativ könnte die Transportstrecke 10 die aussortierten Kunststoffartikel 2a entsprechend der Rückführschleife R' auch direkt zu einem Artikeleingang 5a der Etikettenentfernereinheit 5 zurückführen. Die Transportstrecke 10 besteht beispielsweise aus einem Förderband oder dergleichen. Ebenso denkbar wären einzelne Fahrzeuge (nicht dargestellt), mit denen sich jeweils eine geeignete Menge der aussortierten Kunststoffartikel 2a chargenweise dem Artikelpuffer 4 oder dem Artikeleingang 5a der Etikettenentfernereinheit 5 zuführen ließe. In dem Artikelpuffer 4 werden die aussortierten Kunststoffartikel 2a vorzugsweise mit unbehandelten und geeignet vorsortierten und/oder vereinzelten Kunststoffartikeln 2 vermischt.

Die Sortiereinrichtung 7 ist derart ausgebildet, dass sie nicht nur nicht ordnungsgemäß entfernte Etiketten 3 oder Etikettenreste 3a maschinell erkennen und die zugehörigen Kunststoffartikel 2a maschinell aussondern kann, sondern noch wenigstens eine weitere Sortieraufgabe erfüllt, wie beispielsweise das Aussortieren von Artikelkomponenten und Fremdstoffen je nach Farbgebung, Transparenz, Material, Form, elektrostatischer Ladung und magnetischen Eigenschaften. Somit wird die erfindungsgemäße Sortierfunktion vorzugsweise in einen an sich bekannten Sorter integriert. Die erfindungsgemäße Sortierfunktion ließe sich beispielsweise im Eingangsbereich oder im Ausgangsbereich bereits bestehender Sorter ergänzen. Denkbar wäre jedoch auch eine separate Sortiereinrichtung 7 nur zum Aussondern der nicht ordnungsgemäß behandelten Kunststoffartikel 2a. Ebenso könnte die Sortiereinrichtung 7 eine herkömmliche Sortierstation zum manuellen Aussortieren umfassen oder sein.

Ein Vorteil des erfindungsgemäßen Verfahrens und der entsprechenden Vorrichtung liegt in der vergleichsweise einfachen Implementierung der erfindungsgemäßen Rückführschleife R, R' in Anlagen mit an sich bekannten Behandlungsstationen, gegebenenfalls auch eine nachträgliche Implementierung der Rückführschleife R, R'. Folglich lässt sich mit einem vergleichsweise geringen apparativen Aufwand eine maschinelle Aussortierung fehlerhaft behandelter Kunststoffartikel realisieren und die Reinheit des sortierten Artikelstroms erhöhen. Der ansonsten beträchtliche personelle Aufwand für das manuelle Nachsortieren vor der Zerkleinerung der Kunststoffartikel lässt sich ebenso reduzieren.

## Patentansprüche

1. Verfahren zum Wiederaufbereiten etikettierter Kunststoffartikel (2), insbesondere etikettierter Kunststoffbehälter, mit einem ersten Schritt (S10), in dem Etiketten (3) von den Kunststoffartikeln (2) abgetrennt werden, und mit einem zweiten Schritt (S20), in dem die im ersten Schritt (S10) behandelten Kunststoffartikel sortiert werden,
wobei im zweiten Schritt (S20) Kunststoffartikel (2a), von denen die Etiketten (3) im ersten Schritt (S10) nicht ordnungsgemäß abgetrennt wurden, aussortiert werden und die derart aussortierten Kunststoffartikel (2a) wieder dem ersten Schritt (S10) zugeführt werden,
**dadurch gekennzeichnet, dass**
die Etiketten (3) mechanisch von den Kunststoffartikeln (2) abgelöst werden, und dass die Kunststoffartikel (2a) mit nicht ordnungsgemäß abgetrennten Etiketten (3) maschinell aussortiert werden.

2. Verfahren nach Anspruch 1, bei dem die aussortierten Kunststoffartikel (2a) unbehandelten Kunststoffartikeln (2) vor dem ersten Schritt (S10) zugemischt werden.

3. Verfahren nach Anspruch 1 oder 2, bei dem die aussortierten Kunststoffartikel (2a) gemeinsam mit unbehandelten Kunststoffartikeln (2) vor dem ersten Schritt (S10) zwischengespeichert werden.

4. Verfahren nach wenigstens einem der vorigen Ansprüche, bei dem die Kunststoffartikel im zweiten Schritt (S20) in unzerkleinertem Zustand sortiert werden.

5. Verfahren nach wenigstens einem der vorigen Ansprüche, bei dem nicht ordnungsgemäß entfernte Etiketten (3) im zweiten Schritt (S20) anhand ihres Materials und/oder ihrer Farbgebung und/oder ihrer Transparenz und/oder ihrer Position auf den Kunststoffartikeln (2a) und/oder ihrer Formgebung erkannt werden.

6. Verfahren nach wenigstens einem der vorigen Ansprüche, ferner mit einem dritten Schritt (S30), in dem im zweiten Schritt (S20) nicht aussortierte Kunststoffartikel (2b) zerkleinert werden.

7. Verfahren nach wenigstens einem der vorigen Ansprüche, wobei die Kunststoffartikel (2) benutzte PET-Flaschen sind.

8. Vorrichtung zum Wiederaufbereiten etikettierter Kunststoffartikel (2), insbesondere etikettierter Kunststoffbehälter, mit:
- einer Etikettenentfernereinheit (5) zum maschinellen mechanischen Ablösen von Etiketten (3) von den Kunststoffartikeln (2);
- einer Sortiereinrichtung (7) zum
maschinellen Aussortieren von Kunststoffartikeln (2a), von denen die Etiketten (3) nicht ordnungsgemäß entfernt wurden; und
einem Artikelpuffer (4) zum Zwischenspeichern der derart aussortierten Kunststoffartikel (2a) und/oder ein Transportmittel (10) zum Zurückführen der derart aussortierten Kunststoffartikel (2a) in die Etikettenentfernereinheit (5).

9. Vorrichtung nach Anspruch 8, bei der stromaufwärts der Etikettenentfernereinheit (5) ein gemeinsamer Artikelpuffer (4) für die aussortierten Kunststoffartikel (2a) und für unbehandelte Kunststoffartikel (2) vorgesehen ist.

10. Vorrichtung nach Anspruch 8 oder 9, bei der zwischen der Etikettenentfernereinheit (5) und der Sortiereinrichtung (7) ferner eine Trenneinheit (6) zum Absondern einer Fraktion mit abgelösten Etiketten (3') von den Kunststoffartikeln (2) vorgesehen ist.

11. Vorrichtung nach wenigstens einem der Ansprüche 8 bis 10, bei der stromabwärts der Sortiereinrichtung (7) ferner eine Einheit (9) zum Zerkleinern der sortierten Kunststoffartikel (2b) vorgesehen ist.

12. Vorrichtung nach wenigstens einem der vorigen Ansprüche, wobei die Sortiereinrichtung (7) zum insbesondere automatischen Aussortieren wenigstens einer weiteren Fraktion (F) bestehend aus Komponenten der Kunststoffartikel (2) und/oder Fremdstoffen ausgebildet ist.

13. Vorrichtung nach wenigstens einem der vorigen Ansprüche, wobei die Sortiereinrichtung (7) zum selektiven Inspizieren eines vorgegebenen Bereichs der Kunststoffartikel (2), in dem die Etiketten (3) vorgesehen sind, ausgebildet ist.

## Claims

1. Method of recycling labeled plastic articles (2), in particular labeled plastic containers, with a first step (S10) in which labels (3) are detached from the plastic articles (2), and with a second step (S20) in which the plastic articles treated in the first step (S10) are sorted,
wherein in the second step (S20), plastic articles (2a) from which the labels (3) have not been properly detached in the first step (S10) are sorted out, and the plastic articles (2a) sorted out in this way are again fed to the first step (S10),
**characterized in that**
the labels (3) are mechanically detached from the plastic articles (2), and that the plastic articles (2a) from which the labels (3) have not been properly detached are mechanically sorted out.

2. Method according to claim 1, wherein the sorted-out plastic articles (2a) are added to untreated plastic articles (2) before the first step (S10).

3. Method according to claim 1 or 2, wherein the sorted-out plastic articles (2a) are intermediately stored together with untreated plastic articles (2) before the first step (S10).

4. Method according to at least one of the preceding claims, wherein the plastic articles are sorted in the second step (S20) in a non-crushed state.

5. Method according to at least one of the preceding claims, wherein not properly removed labels (3) are detected in the second step (S20) by their material and/or their coloring and/or their transparency and/or their position on the plastic articles (2a) and/or their shaping.

6. Method according to at least one of the preceding claims, furthermore including a third step (S30) in which plastic articles (2b) not sorted-out in the second step (S20) are crushed.

7. Method according to at least one of the preceding claims, wherein the plastic articles (2) are used PET bottles.

8. Device for recycling labeled plastic articles (2), in particular labeled plastic containers, having:
- a label removal unit (5) for mechanically detaching labels (3) from the plastic articles (2);
- a sorting device (7) for mechanically sorting out plastic articles (2a) from which the labels (3) have not been properly removed; and
an article buffer (4) for intermediately storing the plastic articles (2a) sorted out in this way, and/or a transport means (10) for returning the plastic articles (2a) sorted out in this way to the label removal unit (5).

9. Device according to claim 8, wherein upstream of the label removal unit (5), a common article buffer (4) is provided for the sorted-out plastic articles (2a) and for untreated plastic articles (2).

10. Device according to claim 8 or 9, wherein between the label removal unit (5) and the sorting device (7), a separating unit (6) for discarding a fraction with detached labels (3') from the plastic articles is furthermore provided.

11. Device according to at least one of claims 8 to 10, wherein a unit (9) for crushing the sorted plastic articles (2b) is furthermore provided downstream of the sorting device (7).

12. Device according to at least one of the preceding claims, wherein the sorting device (7) is designed for in particular automatically sorting out at least one further fraction (F) consisting of components of the plastic articles (2) and/or foreign matters.

13. Device according to at least one of the preceding claims, wherein the sorting device (7) is configured for selectively inspecting a predetermined region of the plastic articles (2) in which the labels (3) are provided.

## Revendications

1. Procédé pour le retraitement de recyclage d'articles de matière plastique (2), étiquetés, notamment des bouteilles étiquetées en matière plastique, comprenant une première étape (S10) lors de laquelle des étiquettes (3) sont enlevées des articles de matière plastique (2), et une deuxième étape (S20) au cours de laquelle les articles de matière plastique traités lors de la première étape (S10) sont triés, procédé
d'après lequel au cours de la deuxième étape (S20), on sépare par triage, les articles de matière plastique (2a) dont les étiquettes (3) n'ont pas été correctement enlevées au cours de la première étape (S10), et on amène à nouveau les articles de matière plastique (2a) ainsi séparés par triage, à la première étape (S10),
**caractérisé en ce que**
les étiquettes (3) sont détachées mécaniquement des articles de matière plastique (2), et **en ce que** les articles de matière plastique (2a) avec des étiquettes (3) non correctement enlevées, sont séparés par triage mécanique.

2. Procédé selon la revendication 1, d'après lequel les articles de matière plastique (2a) ayant été séparés par triage sont mélangés, en amont de la première étape (S10), à des articles de matière plastique (2) non traités.

3. Procédé selon la revendication 1 ou la revendication 2, d'après lequel les articles de matière plastique (2a) ayant été séparés par triage sont stockés de façon intermédiaire en commun avec des articles de matière plastique (2) non traités, en amont de la première étape (S10).

4. Procédé selon l'une au moins des revendications précédentes, d'après lequel les articles de matière plastique sont triés au cours de la deuxième étape (S20), dans l'état non déchiqueté.

5. Procédé selon l'une au moins des revendications précédentes, d'après lequel les étiquettes (3) non détachées de manière correcte, sont détectées au cours de la deuxième étape (S20), au regard de leur matériau et/ou de leur coloration et/ou de leur transparence et/ou de leur position sur les articles de matière plastique (2a) et/ou de leur forme ou façonnage.

6. Procédé selon l'une au moins des revendications précédentes, comprenant, par ailleurs, une troisième étape (S30), au cours de laquelle les articles de matière plastique (2b) n'ayant pas été séparés par triage lors de la deuxième étape (S20), sont déchiquetés.

7. Procédé selon l'une au moins des revendications précédentes, d'après lequel les articles de matière plastique (2) sont des bouteilles de PET utilisées.

8. Dispositif pour le retraitement de recyclage d'articles de matière plastique (2) étiquetés, notamment des bouteilles étiquetées en matière plastique, comprenant
- une unité d'enlèvement d'étiquettes (5) pour le détachement mécanique, à la machine, d'étiquettes (3) des articles de matière plastique (2) ;
- un dispositif de tri (7) pour la séparation par triage, à la machine, d'articles de matière plastique (2a) dont les étiquettes (3) n'ont pas été retirées ou enlevées correctement ; et
- un accumulateur d'articles (4) pour stocker de manière intermédiaire les articles de matière plastique (2a) ainsi séparés par triage et/ou un moyen de transport (10) pour ramener les articles de matière plastique (2a) ainsi séparés par triage dans l'unité d'enlèvement d'étiquettes (5).

9. Dispositif selon la revendication 8, dans lequel il est prévu en amont de l'unité d'enlèvement d'étiquettes (5), un accumulateur d'articles (4) commun pour les articles de matière plastique (2a) séparés par triage et pour des articles de matière plastique (2) non traités.

10. Dispositif selon la revendication 8 ou la revendication 9, dans lequel il est en outre prévu entre l'unité d'enlèvement d'étiquettes (5) et le dispositif de tri (7), une unité de séparation (6) pour isoler une fraction avec des étiquettes détachées (3') des articles de matière plastique (2).

11. Dispositif selon l'une au moins des revendications 8 à 10, dans lequel il est en outre prévu, en aval du dispositif de tri (7), une unité (9) pour déchiqueter les articles de matière plastique (2b) triés.

12. Dispositif selon l'une au moins des revendications précédentes, dans lequel le dispositif de tri (7) est conçu pour séparer automatiquement par triage au moins une autre fraction (F) constituée de composants des articles de matière plastique (2) et/ou de substances ou corps étrangers.

13. Dispositif selon l'une au moins des revendications précédentes, dans lequel le dispositif de tri (7) est conçu pour l'inspection sélective d'une zone prédéterminée des articles de matière plastique (2), dans laquelle sont prévues les étiquettes (3).
